Europäisches Patentamt

European Patent Office

Office européen des brevets

(19)

(11) Publication number: **0 345 939**

**A2**

(12) **EUROPEAN PATENT APPLICATION**

(21) Application number: **89304386.9**

(22) Date of filing: **02.05.89**

(51) Int. Cl.⁴: **H04M 1/72**

(30) Priority: **06.06.88 GB 8813306**

(43) Date of publication of application:
**13.12.89 Bulletin 89/50**

(84) Designated Contracting States:
**DE ES FR IT**

(71) Applicant: **PLESSEY OVERSEAS LIMITED**
**Vicarage Lane**
**Ilford Essex IG1 4AQ(GB)**

(72) Inventor: **Baker, John Mark**
**5 The Topiary Binfields**
**Lychpt Basingstoke, RG24 0YX(GB)**
Inventor: **Proctor, Peter N.**
**15 Inkpen Gardens**
**Lychpt Basingtoke, RG24 oYQ(GB)**

(74) Representative: **Allen, Derek**
**The Plessey Company plc Intellectual**
**Property Department Vicarage Lane**
**Ilford Essex, IG1 4AQ(GB)**

(54) **Reducing power cannel acquisition in a multichannel communication system.**

(57) A multichannel communication system comprising a plurality of radio units each radio unit having a channel search facility comprising scanning means for scanning at periodic intervals the channels of the communication system to determine as required whether a channel is free for setting up an outgoing call or has an incoming call for that radio unit. The scanning means is operable in a first scan mode for scanning predefined primary channels and is also operable in subsequent scan modes for scanning secondary, tertiary, and residue channels defining the remainder of the available channels of the communication system. The subsequent scan modes are initiated when a predetermined number of channels in the previous segment, said predetermined number being less than the total number of channels in that segment, have been scanned and identified as being either unavailable for an outgoing call or not having incoming calls for the radio unit as may be required.

EP 0 345 939 A2

# REDUCING POWER CHANNEL ACQUISITION IN A MULTICHANNEL COMMUNICATION SYSTEM

The present invention relates to reducing power channel acquisition in a multichannel communication system.

The invention finds application in the field of cordless telephone communication were a defined area has a number of fixed base units and a number of handsets which communicate with the '

In the present invention, forty channels are available for use by the system, and therefore it becomes necessary for a channel to be selected for transmission whenever a handset wants to initiate a call, or when an incoming call destined to one of the handsets is

Because of power constraints in the handsets and possibly the base stations there is a requirement to scan only a subset of the available forty channels when traffic conditions are light.

Accordingly, an aim of the present invention is to provide means by which channel selection is achieved in an economic manner by radio units which constitute the handset unit or the base unit of

According to the present invention there is provided a multichannel communication system comprising a plurality of radio units each radio unit having a channel search facility comprising scanning means for scanning at periodic intervals the channels of the communication system to determine as required whether a channel is free for setting up an outgoing call or has an incoming call for that radio unit, characterised in that the scanning means is operable in a first scan mode for scanning predefined primary channels and is also operable in subsequent scan modes for scanning secondary tertiary and residue channels defining the remainder of the available channels of the communication system, the subsequent scan modes being initiated when a predetermined number of channels in a previous segment said predetermined number being less than the total number of channels in that segment, have been scanned and identified as being either unavailable for an outgoing call or not having incoming calls for the radio unit as may be required.

An embodiment of the present invention will now be described with reference to the accompanying drawing wherein:-

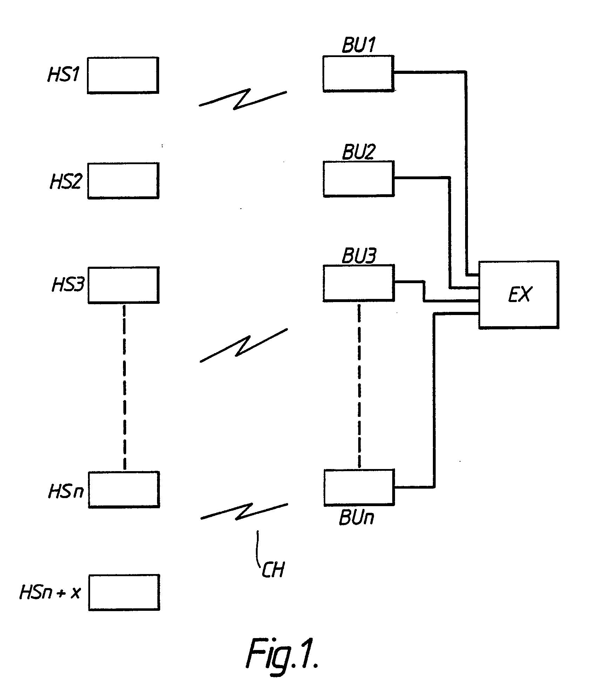

Figure 1 is block diagram showing an arrangement of base units and handsets.

Referring to Figure 1, a plurality of radio units is shown in the form of base units BU1-BUn and handsets HS1-HSn or HS + x. The base units are connected to a telephone exchange EX. There may be the same number of handsets as base units HSn or more handsets than base units HSn + x. Forty radio channels CH are available by which a

Each handset and each base unit has a processor of known form which is loaded with an executive program used to execute a search algorithm which enables each radio unit to search the forty channels in an economic and efficient manner.

Each handset has a unique identification number which is stored in the processor, and at the time the handset originates a call the processor computes a number based on the stored identification number and a fixed numerical algorithm loaded into the executive program. The processor computes a start point from which the channels are searched by scanning means. The handset may also compute the base number according to information supplied by the

The processor causes a frequency synthesiser of known form to be set to the selected channel number. The handset scans the channel and if busy the scanning means steps to the next channel. The base units have the identification numbers of the handsets with which it can communicate, and when it recognises that a channel has call for it, its stops the channel search and completes the radio link

When a call is received via the exchange at a base unit, the base unit computes a start point from which to search the channels and causes a frequency synthesiser to be set. The scanning means searches the channels from the start point in order to find a free channel. The start point is computed from the identification numbers stored in the processor and the numerical algorithm loaded in to the executive program. The base unit transmits the identification number of the handset with which it wants to communicate when a free channel is found. The handsets meanwhile continually scan the channels, and when one recognises that a particular channel has a

In order to minimise the power requirements the executive program utilises the following search algorithm in order to generate a pseudo random start point from which the channels are searched.

The available channels, $n_c$ are split into blocks or segments; the first segment contains the primary channel, the second the secondary channels, the third the tertiary channels, ... etc.. A given non primary segment is switched into the algorithm when traffic increases, and conversely removed when traffic decreases.

Let the segments be numbered, $S_0$, $S_1$,..., $S_{n-1}$.

Then,
$$S_m = 2 S_{m-1} \quad (1 < m < n)$$
so that,

$$\sum_{i=0}^{n-1} S_i = n_c$$

i.e.
$$S_0 + 2 S_0 + 4 S_0 + \dots + 2n S_0 = n_c$$
Therefore,

$$S_0 = \frac{n_c}{2^n - 1}$$

$n_c = 40$ and $S_0 \leq 1$, so that $1 \leq n \leq 5$.
With divisions of $n = 3$, and adjustment for

$$\sum_{i=0}^{2} S_i = 40,$$

$$S_0 = 6,$$

$$S_1 = 12,$$

$$S_2 = 22,$$

With divisions of $n = 4$, and adjustment for

$$\sum_{i=0}^{3} S_i = 40,$$

$$S_0 = 5,$$

$$S_1 = 6,$$

$$S_2 = 10,$$

$$S_3 = 19.$$

A constraint is that the number of primary channels must be at least five, and so allowing for this the following table is obtained.

| $n$ | $S_0$ | $S_1$ | $S_2$ | $S_3$ |
|---|---|---|---|---|
| 3 | 5 | 12 | 22 | - |
| 4 | 5 | 5 | 10 | 20 |

The present implementation uses the four segment approach. The i primary channels in $S_0$ will be denoted $C_{pi}$, and j secondary channels in $S_1$ will he donated $C_{sj}$, the k tertiary channels in $S_2$ will be donated $C_{tk}$, and the m residue channels in $S_3$ will he denoted $C_{rm}$.

The algorithm is based on the selection of a base channel, $C_b$, that is chosen as a function of information stored semi-permanently in the handset and will be in the range 0 to 39.

The search path will consist of the following four sets:-

[1] $\{C_p\}$
[2] $\{C_p\} \cup \{C_s\}$
[3] $\{C_p\} \cup \{C_s\} \cup \{C_t\}$
[4] $\{C_p\} \cup \{C_s\} \cup \{C_t\} \cup \{C_r\}$

The particular set to be accessed is dependent upon the prevailing traffic conditions at the time.

The primary, secondary, tertiary, and residue channels are set at fixed relative locations, but anchored around the base channel, $C_b$. Channels are scanned counting numerically upward from the base channel until the end of the band is reached at which point the remainder of the channels are scanned numerically downward from the base channel. This method, rather than using the modulo arithmetic approach at the end of the range, which is mathematically simpler, has the advantage of not requiring the frequency synthesiser to switch as many channels as the former.

Channels are allocated so that the number of channels to skip from the primary to the secondary to the tertiary and finally to the residue is absolutely minimised.

The channels will be given by the following:-If the $n^{th}$ channel selected is donated by $C_n$, then

$$C_0 = \begin{cases} C_b & \text{if } C_b < 36 \text{ (direction : = increasing)} \\ C_b & \text{if } C_b >= 36 \text{ (direction : = decreasing)} \end{cases}$$

$$C_n = \begin{cases} C_{n-1} + 4 & \text{if direction = increasing and } C_{n-1} < 36 \\ 75 - C_{n-1} & \text{if direction = increasing and } C_{n-1} >= 36 \text{ (direction : = decreasing)} \\ C_{n-1} - 4 & \text{if direction = decreasing and } C_{n-1} >= 4 \\ C_{n-1} - 1 & \text{if direction = decreasing and } C_{n-1} \text{ is odd (direction : = increasing)} \\ C_{n-1} + 1 & \text{if direction = decreasing and } C_{n-1} \text{ is even (direction : = increasing)} \end{cases}$$
$(1 <= n <= 39)$

The first five channels, $C_0$ - $C_4$ represent the primary channels, the second five, $C_5$ - $C_9$ the secondary, the tertiary are represented by $C_{10}$ - $C_{19}$ and the residue by $C_{20}$ - $C_{39}$.

The following tables are examples for different base channels, $C_b$.

| [1] The simplest case is when $C_b = 0$. | |
|---|---|
| Channel Type | Channel Numbers (Search Order) |
| p | 0,4,8,12,16 |
| s | 20,24,28,32,36 |
| t | 39,35,31,27,23,19,15,11,7,3 |
| r | 2,6,10,14,18,22,26,30,34,38,37,33,29,25,21,17,13,9,5,1 |

| [2] $C_b = 27$. | |
|---|---|
| Channel Type | Channel Numbers (Search Order) |
| p | 27,31,35,39,36 |
| s | 32,28,24,20,16 |
| t | 12,8,4,0,1,5,9,13,17,21 |
| r | 25,29,33,37,38,34,30,26,22,18,14,10,6,2,3,7,11,15,19,23 |

| [3] $C_b = 19$. | |
|---|---|
| Channel Type | Channel Numbers (Search Order) |
| p | 19,23,27,31,35 |
| s | 39,36,32,28,24 |
| t | 20,16,12,8,4,0,1,5,9,13 |
| r | 17,21,25,29,33,37,38,34,30,26,22,18,14,10,6,2,3,7,11,15 |

The above description has been of one embodiment of the invention and is not intended to limit the scope of the invention. Alternative ways of implementing the invention will readily be appreciated by those skilled in the art. For example, the four segment approach has been used whereas the available number of channels could have been split up into a greater number of segments, or the order in which the channels have been allocated could have been different.

## Claims

1. A multichannel communication system comprising a plurality of radio units each radio unit having a channel search facility comprising scanning means for scanning at periodic intervals the channels of the communication system to determine as required whether a channel is free for setting up an outgoing call or has an incoming call for that radio unit, characterised in that the scanning means is operable in a first scan mode for scanning predefined primary channels and is also operable in subsequent scan modes for scanning secondary, tertiary, and residue channels defining the remainder of the available channels of the communication system, the subsequent scan modes being initiated when a predetermined number of channels in a previous segment said predetermined number being less than the total number of channels in that segment have been scanned and identified as being either unavailable for a

2. A system as claimed in claim 1, wherein the radio units are base units and handset units of a cordless telephone system.

3. A system as claimed in claim 2, wherein there are more handset units than base units.

4. A system as claimed in claim 2 or 3, wherein each radio unit has a processor loaded with a program which is used to execute a channel search algorithm.

5. A system as claimed in claim 4, wherein each handset unit has a unique identification code stored in the processor thereof, and each base unit has the identification codes stored in the processor thereof of all the handset units with which it can communicate.

6. A system as claimed in claim 5, wherein the processor of each radio unit computes a start point from which the channels are searched and causes a frequency synthesiser to be set to the selected

7. A system as claimed in claim 6, wherein the radio units scan the channels to ascertain if a channel has a call destined for it, whereupon the radio unit stops the channel search and completes a

8. A system as claimed in claim 7, wherein the channel band is split into four segments for searching, and comprises primary, secondary, tertiary and residue channels, and are set at fixed

9. A system as claimed in claim 8, wherein the segments accessed is dependent upon traffic conditions.

6

Fig.1.